# DEMANDE DE BREVET EUROPEEN

(11) **EP 1 826 031 A1**
(43) Date de publication de la demande: **29.08.2007**
(21) Numéro de dépôt: 07002595.2
(22) Date de dépôt: 07.02.2007
(51) Int. Cl.: B60C 23/04

(54) **Procédé et dispositif de localisation de la position de roues d'un véhicule**

(30) Priorité: 28.02.2006 FR 0601733
(71) Demandeur: Siemens VDO Automotive, 31036 Toulouse Cedex 1 (FR)
(72) Inventeur: Costes, Olivier, 31270 Cugnaux (FR)

(57) **Abrégé**

L'invention concerne un procédé de localisation de la position de roues (2-5) d'un véhicule (1) équipées d'un boîtier électronique (6-9). Selon ce procédé, on équipe ce véhicule d'antennes émettrices (12-14) disposées de façon à présenter une zone de couverture dans laquelle est située au moins une roue (2-5). De plus, on commande n émissions successives, par chaque antenne émettrice, d'un signal de requête d'identification, et on procède à une comptabilisation du nombre de signaux de requête d'identification reçus par chaque boîtier électronique (6-9). En outre, on calcule un ratio représentatif du nombre de signaux de requête d'identification comptabilisés reçus par chaque boîtier électronique (6-9), par rapport au nombre de signaux de requête d'identification effectivement émis par l'antenne émettrice (12-14), et on fournit une information de présence du dit boîtier électronique dans la zone de couverture de la dite antenne émettrice, lorsque le ratio calculé est supérieur à une valeur seuil déterminée.

## Description

L'invention concerne un procédé et un dispositif de localisation de la position de roues d'un véhicule équipées d'un boîtier électronique adapté pour émettre, à destination d'une unité centrale montée sur le véhicule, des signaux représentatifs de paramètres de fonctionnement de chaque roue comportant, en outre, un code d'identification de cette dernière.

De plus en plus de véhicules automobiles possèdent, à des fins de sécurité, des systèmes de surveillance comportant des capteurs montés sur chacune des roues du véhicule, dédiés à la mesure de paramètres, tels que pression ou température des pneumatiques équipant ces roues, et destinés à informer le conducteur de toute variation anormale du paramètre mesuré.

Ces systèmes de surveillance sont classiquement dotés d'un capteur monté sur chacune des roues du véhicule et comportant un microprocesseur et un émetteur radiofréquence (ou émetteur RF), et d'une unité centrale de réception des signaux émis par les émetteurs, comportant un calculateur intégrant un récepteur radiofréquence (ou récepteur RF) connecté à une antenne.

Un des problèmes que nécessitent de résoudre de tels systèmes de surveillance réside dans l'obligation de devoir associer à chaque signal reçu par le récepteur de l'unité centrale, une information concernant la localisation du capteur et donc de la roue à l'origine de ce signal, cette obligation perdurant pendant la durée de vie du véhicule, c'est à dire devant être respectée même après des changements de roues ou plus simplement des inversions de la position de ces roues.

A l'heure actuelle, une première méthode de localisation consiste à utiliser trois antennes basse fréquence positionnées chacune à proximité d'une des roues du véhicule, et à effectuer une procédure de localisation consistant à exciter successivement chacune de ces trois antennes par l'émission d'un champ magnétique basse fréquence.

Selon cette procédure, le capteur monté sur la roue située à proximité de l'antenne excitée commande, en réponse et à destination de l'unité centrale, l'émission d'un signal basse fréquence comportant un code d'identification du dit capteur, de sorte que l'excitation successive des trois antennes conduit à la localisation des trois capteurs montés sur les roues jouxtant ces antennes, et par déduction, à la localisation du quatrième capteur.

Le principal avantage d'un tel procédé réside dans le fait que la procédure de localisation est très rapide et conduit à une localisation quasi-instantanée après le démarrage du véhicule.

Par contre, cette solution impose d'équiper le véhicule de trois antennes avec toutes les sujétions afférentes : câbles de connexion, amplificateurs de commande..., de sorte qu'elle s'avère coûteuse.

Cet inconvénient relatif au coût d'installation des moyens de mise en oeuvre du procédé de localisation peut être résolu lorsque le véhicule est équipé d'un dispositif d'accès mains libres destiné à permettre d'accéder au dit véhicule et de démarrer ce dernier.

En effet, la solution consiste alors, tel que notamment décrit dans la demande de brevet WO 02/051654, à utiliser les antennes émettrices de ce dispositif d'accès mains libres montées sur le véhicule, pour mettre en oeuvre la procédure de localisation des roues.

Tel que décrit dans la demande de brevet précitée, la mise en oeuvre de cette solution consiste, par exemple, à commander l'émission par les antennes émettrices d'un signal non codé lorsque les dites antennes sont utilisées en vue de la localisation des roues, et à commander l'émission d'un signal codé lors de l'utilisation des antennes à leur fin originale de contrôle de l'accès au véhicule.

Une telle solution très séduisante en théorie s'avère par contre très délicate à mettre en oeuvre dans la pratique. En effet, les antennes des dispositifs d'accès mains libres ne sont pas positionnées de façon idéale en vue de permettre la localisation des roues d'un véhicule.

De ce fait, et en premier lieu, le caractère sélectif de cette localisation ne peut être obtenu que moyennant des réglages très précis de la puissance d'émission des antennes, et impose généralement d'augmenter la sensibilité des récepteurs montés sur les roues, avec pour conséquence une sensibilité de ces capteurs aux perturbations extérieures.

Dans la pratique, ces conditions extrêmes de réglage conduisent fréquemment à des problèmes d'immunité au bruit et de tolérance de sensibilité des capteurs, dont découle une fiabilité très relative du procédé de localisation.

La présente invention vise à pallier cet inconvénient lié au défaut de fiabilité du procédé de localisation ci-dessus décrit, et a pour principal objectif de fournir un procédé de localisation très performant en termes de réactivité et de fiabilité.

Un autre objectif de l'invention est de fournir un procédé de localisation, nécessitant en outre, en vue de sa mise en oeuvre, une simple adaptation logicielle des dispositifs classiques d'accès mains libres équipant les véhicules actuels.

Un autre objectif de l'invention est de fournir un procédé de localisation qui n'affecte pas la durée de vie des moyens d'alimentation électrique embarqués dans les boîtiers électroniques.

A cet effet, l'invention vise un procédé de localisation de la position de roues d'un véhicule équipées d'un boîtier électronique adapté pour émettre, à destination d'une unité centrale montée sur le véhicule, des signaux représentatifs de paramètres de fonctionnement de chaque roue comportant, en outre, un code d'identification de cette dernière, le dit procédé de localisation consistant à équiper le véhicule d'antennes émettrices disposées chacune de façon à présenter une zone de couverture dans laquelle est située au moins une roue.

Selon l'invention, ce procédé de localisation consiste à mettre en oeuvre une procédure de localisation selon laquelle, successivement pour chacune des antennes émettrices :
- l'unité centrale commande n émissions successives, par la dite antenne émettrice, d'un signal de requête d'identification,
- chaque boîtier électronique procède à une comptabilisation du nombre de signaux de requête d'identification reçus par le dit boîtier électronique, et commande ponctuellement l'émission d'au moins un signal de comptage incorporant le nombre m des dits signaux de requête d'identification reçus,
- et l'unité centrale est programmée, pour chaque boîtier électronique, pour :
   - calculer un ratio représentatif du nombre de signaux de requête d'identification comptabilisés reçus par le dit boîtier électronique par rapport au nombre de signaux de requête d'identification effectivement émis par l'antenne émettrice,
   - et fournir une information de présence du dit boîtier électronique dans la zone de couverture de l'antenne émettrice, lorsque le ratio calculé est supérieur à une valeur seuil déterminée.

Le procédé de localisation selon l'invention consiste donc, en premier lieu, à commander l'émission, par chaque antenne émettrice, d'une pluralité de signaux de requête d'identification, de sorte que, statistiquement, chaque boîtier électronique situé dans la zone de couverture de cette antenne émettrice est obligatoirement sollicité par une requête d'identification.

De plus, chaque boîtier électronique est adapté, non pas pour répondre systématiquement lors de la réception d'un signal de requête d'identification, mais pour incrémenter un compteur et commander l'émission ponctuelle d'un signal de comptage représentatif du nombre des dits signaux de requête d'identification effectivement reçus.

Selon ce principe, le caractère sélectif de la procédure de localisation résulte du fait que :
- seuls les boîtiers électroniques situés dans la zone de couverture d'une antenne émettrice reçoivent un nombre de signaux de requête d'identification susceptible de conduire à leur identification,
- la réception, par un boîtier électronique situé à l'extérieur de la zone de couverture d'une antenne émettrice, de signaux de requête d'identification « parasites », n'a aucune répercussion, du fait que ces signaux « parasites » sont automatiquement « filtrés ».

De ce fait, un tel procédé de localisation permet de travailler à des niveaux de sensibilité élevés des récepteurs montés sur les roues tout en garantissant une insensibilité vis-à-vis des signaux « parasites » et des perturbations électromagnétiques extérieures, ces données se traduisant avantageusement, dans la pratique, par l'obtention d'un procédé de localisation très performant en termes de réactivité et de fiabilité.

En outre, concernant les boîtiers électroniques, ce procédé de localisation ne requiert qu'une simple adaptation logicielle du fonctionnement de ces derniers, destinée à permettre d'assurer la gestion du comptage des signaux de requête d'identification, et de l'émission des signaux de comptage.

En outre, une des conséquences découlant des spécificités du procédé selon l'invention, réside dans la possibilité d'utiliser avantageusement les antennes d'un dispositif d'accès mains libres adapté pour permettre d'accéder à un véhicule et de démarrer ce dernier, moyennant une simple adaptation logicielle de ce dispositif d'accès mains libres consistant notamment à programmer l'unité centrale de façon à adapter cette dernière en vue de la mise en oeuvre de la procédure de localisation selon l'invention.

Dans l'hypothèse où, de façon usuelle connue en soi, chaque boîtier électronique est programmé pour émettre périodiquement, dans une phase dite de « pré-roulage » faisant suite à un démarrage d'un véhicule, un signal d'identification incorporant le code d'identification de la roue, le procédé selon l'invention peut avantageusement consister à intégrer la donnée de comptage dans chacun des dits signaux d'identification.

Ainsi, le procédé de localisation ne requiert pas l'émission par les boîtiers électroniques de signaux spécifiques dédiés à la procédure de localisation, de sorte qu'il n'affecte pas la durée de vie des moyens d'alimentation électrique embarqués dans les dits boîtiers électroniques.

Selon une variante de mise en oeuvre avantageuse du procédé selon l'invention, l'unité centrale est programmée pour commander des émissions ponctuelles des signaux de comptage par les boîtiers électroniques.

Selon ce principe, la procédure de localisation requiert l'émission de signaux spécifiques émis par les boîtiers électroniques. Toutefois, le nombre de signaux de comptage requis étant très faible, leur répercussion sur la durée de vie des moyens d'alimentation électrique embarqués dans les boîtiers électroniques s'avère négligeable.

Par ailleurs, selon une première variante avantageuse de mise en oeuvre du procédé de localisation selon l'invention, l'unité centrale est programmée, pour chaque antenne émettrice, pour effectuer le calcul du ratio au terme des n émissions du signal de requête d'identification.

Selon une seconde variante avantageuse de mise en oeuvre du procédé de localisation selon l'invention, l'unité centrale peut également être programmée, pour chaque antenne émettrice, pour effectuer au moins un calcul intermédiaire de ratio, et pour commander l'interruption des n émissions du signal de requête d'identification lorsque le dit ratio intermédiaire calculé est supérieur à la valeur seuil prédéterminée.

Cette seconde variante de mise en oeuvre permet, en effet, d'écourter la durée d'émission, par chaque antenne émettrice, des signaux de requête d'identification, et conduit donc à réduire la durée globale de la procédure de localisation.

Selon un autre mode de mise en oeuvre avantageux du procédé selon l'invention, lors de chaque commutation entre deux antennes émettrices, l'unité centrale est programmée pour émettre un signal de remise à zéro du comptage des signaux de requête d'identification reçus par les boîtiers électroniques.

Ce mode de mise en oeuvre permet, en effet essentiellement, de gérer les applications selon lesquelles au moins un boîtier électronique est situé dans la zone de couverture de deux antennes émettrices utilisées successivement lors de la procédure de localisation

D'autres caractéristiques buts et avantages de l'invention ressortiront de la description détaillée qui suit en référence aux dessins annexés qui en représentent à titre d'exemple non limitatif un mode de réalisation préférentiel. Sur ces dessins :
- **la figure 1** est une vue de dessus schématique d'un véhicule doté d'un système de surveillance associé à un dispositif selon l'invention de localisation des quatre roues du dit véhicule,
- **et la figure 2** est un schéma synoptique illustrant le déroulement d'une procédure de localisation mise en oeuvre selon le procédé de l'invention.

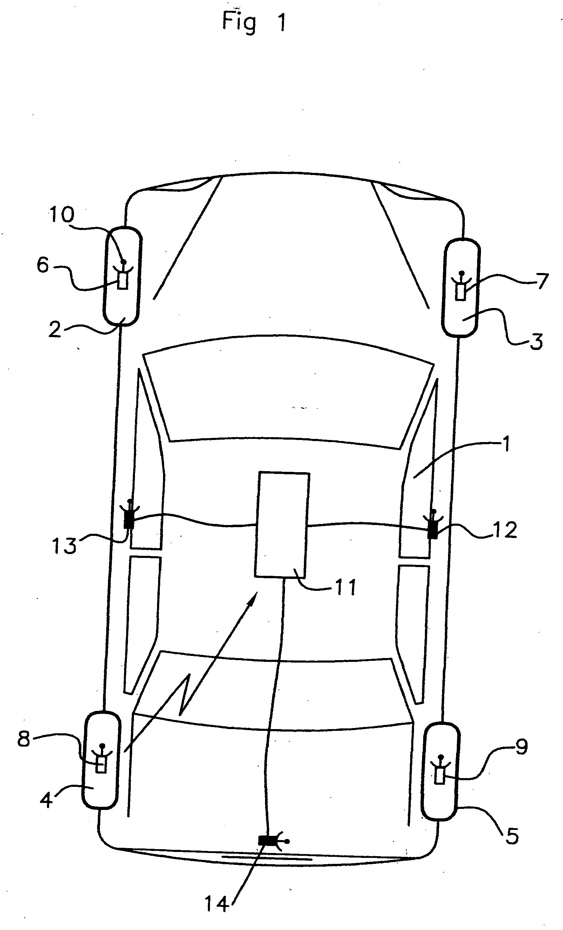

Le dispositif de localisation selon l'invention représenté à titre d'exemple à la figure 1 est destiné à la localisation de la position de roues d'un véhicule.

Ce dispositif de localisation est plus spécifiquement destiné à être installé sur des véhicules dotés d'un système de surveillance tel que celui, représenté à la figure 1, équipant un véhicule 1 muni de quatre roues chaussées classiquement d'un pneumatique : deux roues avant 2, 3 et deux roues arrière 4, 5.

De tels systèmes de surveillance comportent classiquement, en premier lieu, associé à chaque roue 2-5, un boîtier électronique 6-9, par exemple solidarisé sur la jante de la dite roue de façon à être positionné à l'intérieur de l'enveloppe du pneumatique.

Chacun de ces boîtiers électroniques 6-9 intègre, par exemple, des capteurs dédiés à la mesure de paramètres, tels que pression et/ou température du pneumatique, connectés à un microprocesseur possédant un code d'identification du dit boîtier, et relié à un émetteur RF connecté à une antenne basse fréquence telle que 10.

Le système de surveillance comprend, également, un calculateur centralisé ou unité centrale 11 comportant un microprocesseur et intégrant un récepteur RF apte à recevoir les signaux émis par chacun des quatre boîtiers électroniques 6-9.

De façon usuelle, un tel système de surveillance et notamment son unité centrale 11 sont conçus de façon à informer le conducteur de toute variation anormale des paramètres mesurés par les capteurs associés aux roues 2-5.

Le dispositif de localisation selon l'invention comprend également des antennes émettrices 12-14 connectées à l'unité centrale 11 et disposées chacune à proximité d'une paire de roues gauche 2, 4, droite 3, 5, ou arrière 4, 5.

Selon le dispositif de localisation représenté à la figure 1, ces antennes émettrices 12-14 sont constituées d'antennes d'un dispositif usuellement connu sous l'appellation « dispositif d'accès mains libres », adapté pour permettre d'accéder au véhicule 1 et éventuellement de démarrer ce dernier grâce à l'identification d'un badge électronique.

Conformément aux dispositions d'un tel dispositif d'accès mains libres, ces antennes peuvent être, tel que représenté à la figure 1, au nombre de trois, et consister respectivement en :
- une antenne droite 12 positionnée sur la poignée de la porte avant droite du véhicule,
- une antenne gauche 13 positionnée sur la poignée de la porte avant gauche du véhicule,
- et une antenne arrière 14 positionnée sur la poignée de la porte du coffre du véhicule.

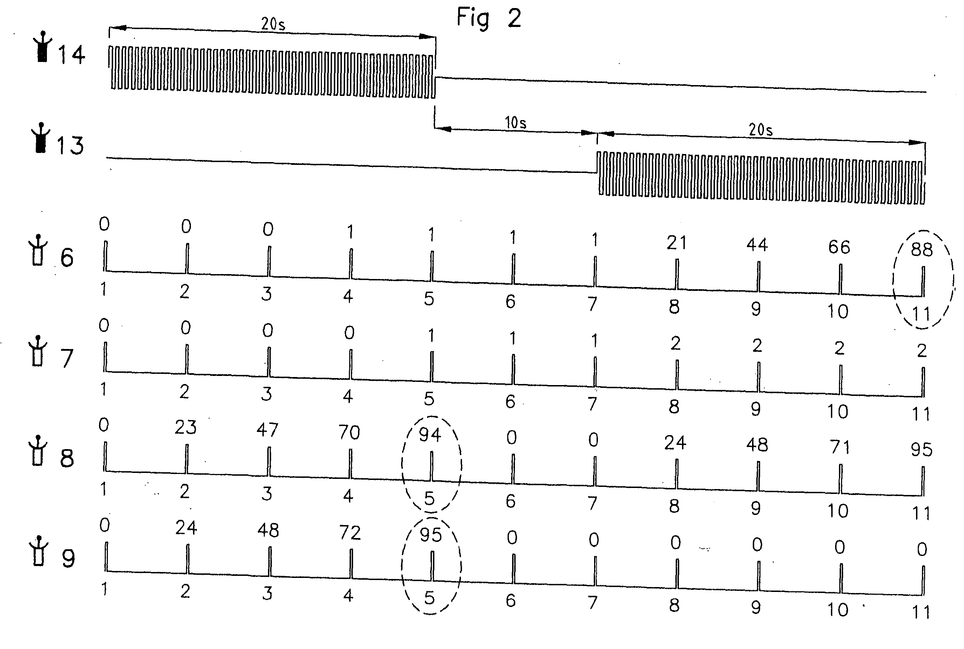

La figure 2 illustre un exemple de procédure de localisation mise en oeuvre au moyen du dispositif de localisation ci-dessus décrit, consistant à utiliser successivement deux antennes, en l'exemple l'antenne arrière 14 puis l'antenne gauche 13, en vue de l'émission des signaux de requête d'identification.

Selon cette procédure de localisation, l'unité centrale 11 commande l'émission par chaque antenne émettrice 13, 14 de cent signaux de requête d'identification émis avec une fréquence de cinq signaux par seconde, de sorte que la durée d'émission de chacune des dites antennes émettrices est égale à vingt secondes. Bien entendu, les valeurs numériques ci-dessus précisées peuvent être modifiées sans pour cela sortir du cadre de la présente invention.

De plus, et tel qu'illustré à la figure 2, la commutation entre les deux antennes émettrices 14,13 conduit à une période de « flottement » usuelle d'une durée de l'ordre de dix secondes, résultant de contingences matérielles classiques connues en elles mêmes.

Ainsi, la durée globale de la procédure de localisation présente une valeur de l'ordre de cinquante secondes.

Selon la procédure de localisation selon l'invention, chacun des boîtiers électroniques 6-9 est, quant à lui, programmé pour :
- comptabiliser les signaux de requête d'identification effectivement reçus par le dit boîtier électronique, par incrémentation d'un compteur,
- et émettre, avec une périodicité de cinq secondes, des trames de données incorporant, d'une part, le code d'identification de la roue 2-5 correspondante, et d'autre part, selon l'invention, la valeur comptabilisée.

Il est à noter que cette périodicité de cinq secondes correspond à la périodicité classique d'émission avec laquelle, actuellement, les boîtiers électroniques 6-9 sont programmés pour émettre des trames de données incorporant le code d'identification, lors d'une phase initiale, dite de « pré-roulage », intervenant après la commutation des dits boîtiers électroniques entre un état "de veille" correspondant à un état arrêté du véhicule 1, et un état « réveillé » déclenché lors de la détection d'un démarrage du dit véhicule.

En dernier lieu, selon la procédure de localisation selon l'invention, l'unité centrale 11 est programmée, au terme de la période d'émission globale de chaque antenne émettrice 14, 13, et pour chaque boîtier électronique 6-9 :
- pour calculer un ratio représentatif du nombre de signaux de requête d'identification comptabilisés reçus par le dit boîtier électronique par rapport au nombre de signaux de requête d'identification, (en l'exemple cent signaux), effectivement émis par l'antenne émettrice 14, 13,
- et pour fournir une information de présence du dit boîtier électronique dans la zone de couverture de l'antenne émettrice 14, 13, lorsque le ratio calculé est supérieur à une valeur seuil déterminée.

De plus, cette unité centrale 11 est également programmée pour commander une remise à zéro du comptage des signaux de requête d'identification reçus par les boîtiers électroniques 6-9, lors de chaque commutation entre les antennes émettrices, en l'exemple lors de la commutation entre les antennes émettrices 14 et 13.

Selon l'exemple représenté à la figure 2, une telle procédure de localisation conduit :
- au terme de l'émission des signaux de requête d'identification par l'antenne arrière 14, à déterminer que les boîtiers électroniques 8 et 9 équipent les roues arrière 4 et 5 du véhicule 1,
- et au terme de l'émission des signaux de requête d'identification par l'antenne gauche 13, à déterminer que les boîtiers électroniques 6 et 8 équipent les roues gauche 2 et 4 du véhicule 1.

Sur la base de ces données, l'unité centrale 11 peut :
- directement déterminer que le boîtier électronique 8 équipe la roue arrière gauche 4 du véhicule 1,
- déduire de cette première localisation, respectivement, que le boîtier électronique 6 équipe la roue avant gauche 2 du véhicule 1, et que le boîtier électronique 9 équipe la roue arrière droite 5 du véhicule 1,
- et enfin, déduire des précédentes localisations, que le boîtier électronique 7 restant, équipe la roue avant droite 3 du véhicule 1.

## Revendications

1. Procédé de localisation de la position de roues (2-5) d'un véhicule (1) équipées d'un boîtier électronique (6-9) adapté pour émettre, à destination d'une unité centrale (11) montée sur le véhicule (1), des signaux représentatifs de paramètres de fonctionnement de chaque roue comportant, en outre, un code d'identification de cette dernière, le dit procédé de localisation consistant à équiper le véhicule (1) d'antennes émettrices (12-14) disposées chacune de façon à présenter une zone de couverture dans laquelle est située au moins une roue (2-5), et étant **caractérisé en ce qu'**il consiste à mettre en oeuvre une procédure de localisation selon laquelle, successivement pour chacune des antennes émettrices (12-14) :
- l'unité centrale (11) commande n émissions successives, par la dite antenne émettrice, d'un signal de requête d'identification,
- chaque boîtier électronique (6-9) procède à une comptabilisation du nombre de signaux de requête d'identification reçus par le dit boîtier électronique, et commande ponctuellement l'émission d'au moins un signal de comptage incorporant le nombre m des dits signaux de requête d'identification reçus,
- et l'unité centrale (11) est programmée, pour chaque boîtier électronique (6-9), pour :
• calculer un ratio représentatif du nombre de signaux de requête d'identification comptabilisés reçus par le dit boîtier électronique par rapport au nombre de signaux de requête d'identification effectivement émis par l'antenne émettrice (12-14),
• et fournir une information de présence du dit boîtier électronique dans la zone de couverture de l'antenne émettrice (12-14), lorsque le ratio calculé est supérieur à une valeur seuil déterminée.

2. Procédé de localisation selon la revendication 1 dans lequel chaque boîtier électronique (6-9) est programmé pour émettre périodiquement, dans une phase dite de « pré-roulage » faisant suite à un démarrage d'un véhicule, un signal d'identification incorporant le code d'identification de la roue (2-5), **caractérisé en ce qu'**il consiste à intégrer la donnée de comptage dans chacun des dits signaux d'identification.

3. Procédé de localisation selon la revendication 1 **caractérisé en ce que** l'unité centrale (11) est programmée pour commander des émissions ponctuelles des signaux de comptage par les boîtiers électroniques (6-9).

4. Procédé de localisation selon l'une des revendications 2 ou 3 **caractérisé en ce que**, pour chaque antenne émettrice (12-14), l'unité centrale est programmée pour effectuer le calcul du ratio au terme des n émissions du signal de requête d'identification.

5. Procédé de localisation selon l'une des revendications 2 ou 3 **caractérisé en ce que**, pour chaque antenne émettrice (12-14), l'unité centrale (11) est programmée pour effectuer au moins un calcul intermédiaire de ratio, et pour commander l'interruption des n émissions du signal de requête d'identification lorsque le dit ratio intermédiaire calculé est supérieur à la valeur seuil prédéterminée.

6. Procédé de localisation selon l'une des revendications précédentes **caractérisé en ce que**, lors de chaque commutation entre deux antennes émettrices (12-14), l'unité centrale (11) est programmée pour émettre un signal de remise à zéro du comptage des signaux de requête d'identification reçus par les boîtiers électroniques (6-9).

7. Procédé de localisation selon l'une des revendications précédentes **caractérisé en ce que** l'on utilise, lors de la procédure de localisation , les antennes (12-14) d'un dispositif d'accès mains libres équipant le véhicule (1), adapté pour permettre d'accéder au dit véhicule et de démarrer ce dernier.
